# EUROPÄISCHE PATENTANMELDUNG

(11) **EP 4 837 783 A1**
(43) Veröffentlichungstag der Anmeldung: **11.11.2026**
(21) Anmeldenummer: 26164994.1
(22) Anmeldetag: 16.03.2026
(51) Int. Cl.: B60N 2/90, A47C 27/08, A61H 9/00

(54) **VORRICHTUNG ZUR MANIPULATION EINES OBERFLÄCHENBEREICHS EINES SITZES UND VERFAHREN ZU DESSEN HERSTELLUNG**

(30) Priorität: 09.05.2025 DE 102025117968
(71) Anmelder: Faurecia Autositze GmbH, 30419 Hannover (DE)
(72) Erfinder: Pajdak, Marcin, 58-350 Mieroszow (PL)
(74) Vertreter: Schober, Mirko

(57) **Zusammenfassung**

Eine Vorrichtung (1, 10), bevorzugt eine Massage- oder Verstellvorrichtung, zur Manipulation eines Oberflächenbereichs eines Sitzes umfasst zwei Folienzuschnitte (2, 3). Von den Folienzuschnitten weist wenigstens ein Folienzuschnitt (2, 3) mindestens eine in diesem ausgebildete Dehnstruktur (D, D1, D2) auf. Im Bereich der Dehnstruktur sind die beiden Folienzuschnitte (2, 3) durch eine Schweißnaht (S) derart miteinander verbunden, dass diese eine mit Fluid befüllbare Hohlkammer (H) zwischen sich einschließen. Durch eine Veränderung des Füllgrads der oder der jeweiligen Hohlkammer (H) ist die Ausdehnung der sie zumindest bereichsweise begrenzenden Dehnstruktur (D, D1, D2) in Bezug auf eine Hubrichtung (Z) von einem komprimierten Zustand (C1) in einen expandierten Zustand (C2) und zurück veränderbar. Die oder die jeweilige Dehnstruktur (D, D1, D2) weist um ihre Hubrichtung (Z) herum, bevorzugt koaxial oder konzentrisch, verlaufende Ringfalten (7a-7g; 8a-8g) auf. Dabei sind entweder wenigstens oder jeweils zwei Ringfalten (7a-7g; 8a-8g) direkt miteinander verbunden. Der Außenradius (R2-R7) der näher um die Hubrichtung (Z) herum verlaufenden Ringfalte (7b-7g; 8b-8g) ist gleich dem Innenradius (rl-r6) der mit ihr verbundenen Ringfalte (7a-7f; 8a-8f) oder/und wenigstens oder jeweils zwei der Ringfalten (7a-7e; 8a-8e) sind durch eine Ringwand (5a-5d; 6a-6d) miteinander verbunden. Der Außenradius (R2-R4) der näher um die Hubrichtung (Z) herum verlaufenden Ringwand (5b-5d; 6b-6d) ist kleiner oder gleich dem Innenradius (r1-r3) der anderen Ringwand (5a-5c; 6a-6c).

## Beschreibung

Die Erfindung betrifft eine Vorrichtung zur Manipulation eines Oberflächenbereichs eines Sitzes, eine Massagematte für einen Fahrzeugsitz mit wenigstens einer solchen Vorrichtung sowie ein Verfahren zur Herstellung einer Vorrichtung zur Manipulation eines Oberflächenbereichs eines Sitzes.

Fahrzeugsitze weisen Expansionskörper in Gestalt von fluidbefüllbaren Blasen auf. Eine solche Blase umfasst üblicherweise wenigstens zwei miteinander verbundene Folienlagen, zwischen denen eine Hohlkammer eingeschlossen ist. Ein gezieltes Entleeren und Befüllen der Blase mit einem Fluid sorgt für eine entsprechende Volumenveränderung, welche eine mechanische Arbeit bewirkt.

Der mögliche Hubweg eines so ausgestalteten Expansionskörpers hängt maßgeblich von dessen Aufbau ab. Vor allem großhubige Expansionskörper weisen daher einzelne Falten auf, deren Verhalten eine Vergrößerung des Hubwegs ermöglicht.

Aus DE 10 2019 219 675 A1 ist eine Massagematte für einen Fahrzeugsitz mit einer Vielzahl an faltenbalgartigen Dehnstrukturen bekannt. In der konkreten Umsetzung setzt sich jede Dehnstruktur durch das Verschweißen mehrerer ringförmiger und eines geschlossenen Folienzuschnitts aus flexiblem Kunststoffmaterial zusammen. Die somit einseitig offenen Dehnstrukturen sind mit ihrer offenen Seite auf einer ebenen Trägerfolie angeordnet, so dass diese jeweils eine Hohlkammer zwischen sich und der Trägerfolie einschließen.

DE 10 2011 088 895 A1 beschreibt ein Verfahren zur Herstellung einer Dehnstruktur aus mindestens einem Folienzuschnitt, durch dessen Verschweißen zunächst eine einen Innenraum definierende Hülle ausgebildet wird. Die eigentliche Gestalt wird in einer Prägeform erzeugt, in welcher der Expansionskörper oder dessen Hülle erhitzt und an eine gewölbte Oberfläche der Prägeform gesaugt oder gedrückt wird. Dieser Vorgang kann als Tiefziehen oder Thermoformen des/der Folienzuschnitt/s/e angesehen werden. Die den Innenraum begrenzenden Teile des/der Folienzuschnitt/s/e werden dabei zusammen zunächst in dieselbe Richtung gedehnt, wobei der so konkav, also quasi entgegengesetzt eingebeulte Teil beim erstmaligen Befüllen der Dehnstruktur mit Fluid von dem anderen Teil entfernbar und hierdurch in die dann richtige Richtung umklappbar ist.

Aus US 2019/0308537 A1 ist eine pneumatische Vorrichtung zur Veränderung der Sitzkontur eines Fahrzeugsitzes bekannt, welche eine aus einer ersten und einer zweiten Folienlage bestehende ebene Trägerfolie aufweist. An der zweiten Folienlage ist eine Vielzahl an jeweils eine Hohlkammer begrenzenden Dehnstrukturen befestigt, wobei deren jeweilige Hohlkammer mit einer Öffnung in der zweiten Folienlage fluidleitend verbunden ist. Durch parallel zueinander verlaufende und die beiden Folienlagen miteinander verbindende Verbindungsnähte sind einzelne Kanäle in der Trägerfolie ausgebildet, welche jeweils eine Verbindung zu den Öffnungen innerhalb der zwei-ten Folienlage aufweisen. Hierdurch sind die einzelnen Dehnstrukturen über den jeweils zugehörigen Kanal entsprechend befüllbar und entleerbar.

Aus US 10,793,041 B2 ist eine weitere pneumatische Vorrichtung zur Veränderung der Sitzkontur eines Fahrzeugsitzes zu entnehmen. Diese weist eine Vielzahl an Dehnstrukturen auf, welche jeweils auf in einen zweiten Folienzuschnitt eingebrachten Ausformungen basieren. Deren jeweils einseitig offene Hohlkammer ist durch einen demgegenüber ebenen erste Folienzuschnitt verschlossen. Neben der Herstellung der einzelnen Dehnstrukturen mittels Spritzgießen des zweiten Folienzuschnitts können diese alternativ auch durch deren Tiefziehen ausgebildet sein.

Viele Einsatzzwecke derartiger Vorrichtungen verlangen eine in Bezug auf deren Hubrichtung möglichst großhubige Dehnstruktur, was bisher auf einer faltenbalgartigen Ausgestaltung basiert. Die dabei aufeinanderliegenden Falten lassen eine großzügige Ausdehnung der jeweiligen Dehnstruktur im expandierten Zustand zu. Demgegenüber gibt es im komprimierten Zustand Grenzen, wenn es um möglichst geringe Abmessungen geht. Gegenüber dem Aufbau jeder faltenbalgartigen Dehnstruktur durch lageweises Verschweißen einzelner Folienzuschnitte verlangt die formgebende Ausbildung eines Folienzuschnitts mittels Spritzgießen oder Tiefziehen bereits weniger Herstellungsaufwand mit entsprechend geringeren Kosten. Durch die so mögliche Reduzierung der einzelnen Herstellungsschritte sinkt zudem die Gefahr einer fehlerhaften Umsetzung, welche sich in qualitativ schlechten Schweißnähten und damit in einer sofortigen oder schnell eintretenden Undichtigkeit äußern kann. Zudem erhöht jede Schweißnaht die durch den lokalen Hitzeeintrag entstehenden Spannungen innerhalb des Materials, was zu einem unerwünschten Bewegungsverhalten der jeweiligen Dehnstruktur führen kann.

Vor diesem Hintergrund liegt der Erfindung die Aufgabe zugrunde, eine Vorrichtung mit wenigstens einer großhubigen Dehnstruktur dahingehend zu verbessern, dass diese bei gleichzeitig hoher Haltbarkeit und wenig Materialeinsatz möglichst geringe Abmessungen aufweist. Dabei soll auch ein Verfahren zur Herstellung einer entsprechenden Vorrichtung geschaffen werden.

Die Aufgabe wird durch eine Vorrichtung mit den Merkmalen des Anspruchs 1, eine Massagematte mit den Merkmalen des Anspruchs 7 und ein Verfahren mit den Merkmalen des Anspruchs 8 gelöst.

Erfindungsgemäß ist eine Vorrichtung mit einer Dehnstruktur vorgesehen, welche um ihre Hubrichtung herum verlaufende Ringfalten aufweist, von denen jeweils zwei Ringfalten durch eine Ringwand miteinander verbunden sind. Dabei ist von jeweils zwei durch eine Ringwand miteinander verbundenen Ringfalten der Außenradius der näher um die Hubrichtung herum verlaufenden Ringfalte kleiner oder gleich dem Innenradius der anderen Ringfalte. Mit anderen Worten würde der theoretische vertikale Schattenwurf der einzelnen Ringfalten unter Ausblendung der Ringwände so entweder einen in sich geschlossenen oder einen wenigstens zwischen zwei der Ringfalten durch einen Ringspalt unterbrochenen runden Schatten aufweisen. Vorzugsweise können die einzelnen Ringfalten dabei koaxial oder konzentrisch zueinander angeordnet sein.

Unter dem im Rahmen der vorliegenden Erfindung gewählten Begriff "Ringfalte" wird eine durch zwei geschlossene Kurven begrenzte Falte verstanden. Dabei ist der entsprechend inneren Kurve der Innenradius der Ringfalte zugeordnet, während die entsprechend äußere Kurve den Außenradius derselben Ringfalte aufweist. Beide dieser Kurven können kreisrund sein. Alternativ können die beiden Kurven eine hiervon abweichende geometrische Form besitzen. Selbstverständlich ist auch eine Kombination denkbar, bei der eine der beiden Kurven kreisrund ausgestaltet ist, während die andere Kurve eine hiervon abweichende Form aufweist. Unter einer "abweichenden Form" wird im Rahmen der Erfindung jegliche sich von einer kreisrunden Form unterscheidende Form verstanden. Eine solche kann zumindest abschnittsweise beispielsweise elliptisch, rechteckig, gewellt, treppenartig oder in sonstiger Weise insgesamt unregelmäßig gestaltet sein, um nur einige mögliche Ausgestaltungen in einer nicht abschließenden Aufzählung zu benennen. Grundsätzlich kann besagter Innenradius der inneren Kurve und/oder besagter Außenradius der äußeren Kurve über den gesamten Umfang der Ringfalte hinweg entweder gleichmäßig oder ungleichmäßig sein. Die durch die geschlossenen Kurven begrenzte Ebene der Falte kann in sich eben oder auf jede erdenkliche Art uneben gestaltet sein. Dies meint deren Erstreckung in Umfangsrichtung der Ringfalte und/oder deren radiale Erstreckung. Mit Bezug auf das erfindungsgemäße Merkmal werden für den Innenradius und den Außenradius jene Abstände vom Zentrum oder einem zentralen Punkt der Dehnstruktur aus betrachtet, welche sich durch den jeweiligen Schnitt der inneren Kurve (für den Innenradius) und der äußeren Kurve (für den Außenradius) mit einer radialen Linie ergeben. Das zu dem Begriff "Ringfalte" Gesagte gilt zumindest sinngemäß auch für den im Rahmen der vorliegenden Erfindung gewählten Begriff "Ringwand".

Der sich aus der erfindungsgemäßen Ausgestaltung der Vorrichtung ergebende Vorteil liegt im Wesentlichen darin begründet, dass ihre, bevorzugt jeweilige, Dehnstruktur keine in Bezug auf die Hubrichtung übereinanderliegenden Falten, sondern einzelne, durch Ringwände miteinander verbundene Ringfalten aufweist, welche innerhalb eines radialen Korridors von der Hubrichtung weg aufeinanderfolgend angeordnet sind. Hierdurch lassen sich im komprimierten Zustand überaus geringe Abmessungen erreichen. Durch die Ausbildung der einzelnen Ringfalten und Ringwände innerhalb wenigstens eines Folienzuschnitts entfällt zudem der mit viel Aufwand und Materialverlust aufgrund von Verschnitt einhergehende Aufbau der Dehnstruktur durch einzelne Teile. Erfindungsgemäß handelt es sich bei den Ringfalten und Ringwänden der oder der jeweiligen Dehnstruktur um materialeinheitlich einstückige Teile eines Folienzuschnitts, in welchen die Dehnstruktur durch ein geeignetes Verfahren eingebracht ist.

Sofern die Vorrichtung nur eine einzelne Hohlkammer zwischen zwei Folienzuschnitten besitzt, kann diese auch als Expansionskörper oder als Blase bezeichnet werden. Dies unabhängig davon, ob nur eine der beiden Folienzuschnitte oder beide Folienzuschnitte eine Dehnstruktur aufweisen. Demgegenüber kann die Vorrichtung als Verstellvorrichtung oder alternativ als Expansionsanordnung oder Expansionssystem bezeichnet werden, sofern diese mehr als eine einzelne Hohlkammer besitzt. In ihrer Funktion kann diese dann beispielsweise zur Anpassung der Härte oder Weichheit wenigstens eines Oberflächenbereichs eines Sitzes, bevorzugt Fahrzeugsitzes, dienen. Zusätzlich oder alternativ kann diese auch zur Anpassung der Textur einer Oberfläche genutzt werden, um den Komfort einer den Sitz nutzenden Person zu erhöhen oder deren Halt im Sitz zu verbessern. Weiter alternativ kann die Vorrichtung auch zur Umsetzung einer Massagefunktion dienen, so dass diese auch als Massagevorrichtung, Massageanordnung oder als Massagematte bezeichnet werden kann, bevorzugt sofern diese mehr als eine einzelne Hohlkammer besitzt. Dies unabhängig davon, ob pro Hohlkammer nur einer der beiden Folienzuschnitte oder beide Folienzuschnitte eine Dehnstruktur aufweisen. Hierdurch ist es möglich, die Oberfläche eines Sitzes zumindest bereichsweise zu bewegen oder in Vibration zu versetzen, um einzelne Muskeln der den Sitz nutzenden Person zu stimulieren und deren Entspannung zu fördern.

Bei den beiden Folienzuschnitten kann es sich bevorzugt um zwei voneinander getrennte Abschnitte einer Folie handeln. Selbstverständlich ist auch denkbar, dass es sich um einen demgegenüber zusammenhängenden Teil einer Folie handeln kann, durch dessen Faltung zwei seiner entlang der Faltung insofern materialeinheitlich einstückig miteinander verbundenen Abschnitte übereinander angeordnet sind.

Bevorzugt kann jede Ringwand der oder der jeweiligen Dehnstruktur entlang einer Faltkante gegenüber wenigstens einer mit ihr verbundenen Ringfalte abwinkelbar sein. Die Falt-kanten sind in dem Folienzuschnitt auf geeignete Weise ausgebildet, um ein kontrolliertes Expansions- und Kompressionsverhalten der oder der jeweiligen Dehnstruktur zu erhalten. Vorzugsweise können die Faltkanten rund oder kreisrund ausgestaltet sein, so dass die Ringfalten und Ringwände ebenfalls eine entsprechend runde oder kreisrunde Ausgestaltung aufweisen können. Gegenüber der Bewegung im Bereich von durch Schweißnähte miteinander verbundenen Einzelteilen einer solchen Dehnstruktur weisen die in das Material selbst eingearbeiteten Faltkanten eine höhere Haltbarkeit auf.

Mit Blick auf die Ausgestaltung der oder der jeweiligen Dehnstruktur sieht die Erfindung vor, dass deren Ringfalten sich im komprimierten Zustand der Dehnstruktur abwechselnd in einer von zwei in Bezug auf die Hubrichtung zueinander beabstandeten Ebenen erstrecken können. Dies meint, dass eine Ringfalte sich beispielsweise in einer ersten Ebene erstreckt, während eine unmittelbar benachbarte Ringfalte demgegenüber in einer von der ersten Ebene beabstandeten zweiten Ebene liegt. Vorzugsweise können die beiden Ebenen dabei parallel zueinander beabstandet sein. Zusammen mit den sich jeweils zwischen zwei Ringfalten erstreckenden Ringwänden ergibt sich im Querschnitt der im komprimierten Zustand befindlichen Dehnstruktur somit eine Art Zahnung oder Rechteckkurve. Auf diese Weise erstreckt sich die sonst in Bezug auf die Hubrichtung übereinanderliegende Faltung der Dehnstruktur anderer solcher Vorrichtungen in eine zur Hubrichtung senkrechte Richtung, was überaus kompakte Abmessungen erlaubt.

Bevorzugt kann die oder die jeweilige Dehnstruktur der Vorrichtung ein zentrales Plateau aufweisen. Dabei kann sich die Achse der Hubrichtung durch das Zentrum des Plateaus hindurch erstrecken. Das Plateau ist durch eine umlaufende Faltkante begrenzt, wobei die am nächsten um die Hubrichtung herum verlaufende Ringfalte der Dehnstruktur durch eine Ringwand entlang dieser Faltkante mit dem Plateau verbunden und gegenüber diesem abwinkelbar ist. In vorteilhafter Weise kann das Plateau dabei rund oder kreisrund gestaltet sein. Bevorzugt im expandierten Zustand der oder der jeweiligen Dehnstruktur kann deren Plateau den dann am höchsten gelegenen Teil bilden.

Sofern die oder die jeweilige Dehnstruktur der Vorrichtung ein zentrales Plateau aufweist, kann an dieser ein Anschluss, bevorzugt Einfachanschluss, vorgesehen sein, welcher fluidleitend mit der oder der jeweils zugehörigen Hohlkammer der Vorrichtung verbunden ist. Auf diese Weise ist es möglich, Fluid durch den oder den jeweiligen Anschluss hindurch in die Hohlkammer einzuleiten und wieder auszuleiten, um den jeweils gewünschten Füllgrad der Hohlkammer zu erhalten. Durch eine dynamische Veränderung der oder der jeweiligen Hohlkammer kann diese oder können diese zur Umsetzung einer Massagefunktion genutzt werden. Der Anschluss kann beispielsweise so ausgebildet sein, dass dieser eine steckbare Verbindung mit einer, bevorzugt flexiblen, Leitung ermöglicht, durch die hindurch Fluid ein- und ausleitbar ist.

Bei dem Fluid kann es sich grundsätzlich bevorzugt um ein gasförmiges Fluid, bevorzugt Luft, handeln. Selbstverständ-lich ist auch der Einsatz eines flüssigen Fluids denkbar, welches eine demgegenüber geringere Kompressibilität aufweisen kann, sofern dies erforderlich ist. Hierbei obliegt es dem Fachmann, die dann notwendige Anlagentechnik zu wählen, um die oder die jeweilige Hohlkammer entsprechend anzusteuern.

Alternativ oder ergänzend zu der Anordnung eines Anschlusses an dem oder dem jeweiligen Plateau kann wenigstens einer der Folienzuschnitte zumindest eine in diesem ausgebildete linienförmige Vertiefung aufweisen. Dies ermöglicht, dass die Folienzuschnitte unter Ausbildung wenigstens eines mit der oder mindestens einer Hohlkammer fluidleitend verbundenen Kanals miteinander verbunden sein können. Die Verbindung kann dabei vorzugsweise entlang von die Vertiefung zwischen sich begrenzenden Vertiefungsrändern erfolgen. Je nach Ausgestaltung kann der oder der jeweilige Kanal dann zwischen der oder einer linienförmigen Vertiefung eines Folienzuschnitts und einem demgegenüber beispielsweise ebenen Bereich des anderen Folienzuschnitts ausgebildet sein. Um einen größeren Querschnitt zu erhalten, kann der oder der jeweilige Kanal vorzugsweise zwischen der oder einer linienförmigen Vertiefung eines Folienzuschnitts und der oder einer linienförmigen Vertiefung des anderen Folienzuschnitts ausgebildet sein. Hierdurch reicht allein die zuvor in wenigstens einen der Folienzuschnitte eingebrachte Formgebung aus, um die oder die jeweilige Hohlkammer mit Fluid zu befüllen oder dieses auszuleiten, ohne dass es zusätzliche Bauteile wie beispielsweise wenigstens eine Leitung benötigt. Dies ermöglicht eine schnelle und günstige Fertigung sowie kompakte Bauweise der Vorrichtung. Vorzugsweise kann die zur Ausbildung wenigstens eines Kanals dienende Verbindung der Folienzuschnitte durch eine stoffschlüssige Verbindung, besonders bevorzugt durch deren linienförmiges Verschweißen, entlang der Vertiefungsränder umgesetzt sein.

Vorteilhaft ist, wenn der Kanal oder die Kanäle, bevorzugt jeweils, mit einem Einfachanschluss oder Mehrfachanschluss fluidleitend verbunden ist/sind. Auf diese Weise erhält die Vorrichtung wenigstens eine, beispielsweise steckbare oder schraubbare, vorzugsweise lösbare, Anschlussmöglichkeit, um den oder die Kanäle an ein den Fluidfluss erzeugendes und kontrollierendes System anzuschließen. Vorzugsweise kann dieser Anschluss oder wenigstens einer dieser Anschlüsse an einem gemeinsamen Rand der Folienzuschnitte angeordnet sein, um eine insgesamt kompakte Bauweise und/oder leicht zugängliche Anschlussmöglichkeit zu erhalten.

Nach einer bevorzugten Ausführung kann vorgesehen sein, dass wenigstens einer der Folienzuschnitte zumindest bereichsweise aus thermoplastischem Polyurethan (TPU) besteht oder dieses aufweist. Der Vorteil besteht in dessen hoher Flexibilität sowie Haltbarkeit gegenüber sich wiederholenden Belastungen bei gleichzeitig hoher Form- und Leistungsstabilität. Je nach Anwendungsfall kann die Festigkeit von thermoplastischem Polyurethan aber auch gezielt angepasst sein, da dessen Eigenschaften ein breites Spektrum bieten, welches von weich und flexibel bis hin zu steif und zäh reichen kann. Zudem weist es eine hohe mechanische Festigkeit sowie Beständigkeit gegenüber UV-Strahlung und Stoffen wie beispielsweise Chemikalien und Ölen auf, was dessen Einsatz bevorzugt in anspruchsvollen Umgebungen begünstigt, so wie sie in Kraftfahrzeugen vorliegen können.

Die erfindungsgemäße Vorrichtung weist einen überaus geringen Materialeinsatz und kompakte Abmessungen auf, bei gleichzeitig hoher Haltbarkeit. Besonders die Ausgestaltung der wenigstens einen in mindestens einen Folienzuschnitt eingebrachten Dehnstruktur erlaubt deren schnell umsetzbare und schlanke Formgebung, was eine insgesamt kostengünstige Herstellung der Vorrichtung ermöglicht.

Weiterhin ist die Erfindung auf eine Massagematte gerichtet, welche bevorzugt in einem Fahrzeugsitz angeordnet werden kann. Die Massagematte kann hierzu eine der drei nachfolgend näher beschriebenen alternativen Zusammensetzungen aufweisen:
In einer ersten alternativen Zusammensetzung kann die Massagematte eine Trägerlage aufweisen, an der mehrere erfindungsgemäße Vorrichtungen angeordnet sind. Vorzugsweise besitzt jede der Vorrichtungen dann nur eine einzelne Hohlkammer, welche entweder zwischen der Dehnstruktur des einen Folienzuschnitts und der Dehnstruktur oder einem, vorzugsweise ebenen, Bereich des anderen Folienzuschnitts gelegen ist. Konkret können die einzelnen Vorrichtungen so jeweils beispielsweise einen Expansionskörper oder eine Blase bilden. In vorteilhafter Weise können die einzelnen Vorrichtungen hierbei stoffschlüssig mit der Trägerlage verbunden sein, beispielsweise mittels Kleben oder Schweißen.

Gemäß einer zweiten alternativen Zusammensetzung kann die Massagematte eine einzelne erfindungsgemäße Vorrichtung aufweisen, bei der nur einer ihrer beiden Folienzuschnitte mehrere Dehnstrukturen aufweist. Dabei schließen die Dehnstrukturen des einen Folienzuschnitts zusammen mit, vorzugsweise ebenen, Bereichen des anderen Folienzuschnitts jeweils eine gemeinsame Hohlkammer zwischen sich ein. Der dann keine Dehnstrukturen aufweisende Folienzuschnitt kann dabei selbst als Trägerlage dienen und auch so bezeichnet werden.

Nach einer dritten alternativen Zusammensetzung kann die Massagematte eine einzelne erfindungsgemäße Vorrichtung aufweisen, bei der beide Folienzuschnitte jeweils mehrere Dehnstrukturen aufweisen. Dabei schließen die Dehnstrukturen des einen Folienzu-schnitts zusammen mit den Dehnstrukturen des anderen Folienzuschnitts jeweils eine gemeinsame Hohlkammer zwischen sich ein.

Weiter ist die Erfindung auf einen Sitz, vorzugsweise Fahrzeugsitz, gerichtet, welcher wenigstens eine der bereits oben erwähnten Vorrichtung oder eine Ausgestaltung der oben näher erläuterten erfindungsgemäßen Massagematte besitzt.

Die Erfindung betrifft auch ein Verfahren, welches der Herstellung einer Vorrichtung zur Manipulation eines Oberflächenbereichs eines Sitzes, vorzugsweise Massage- oder Verstellvorrichtung, dient. Bei der herzustellenden Vorrichtung kann es sich um die erfindungsgemäße Vorrichtung handeln. Jedenfalls umfasst das erfindungsgemäße Verfahren die folgenden Schritte:
- Bereitstellen zweier Folienzuschnitte;
- Ausbilden mindestens einer Dehnstruktur in wenigstens einem der Folienzuschnitte;
- Anordnen der Folienzuschnitte zumindest bereichsweise übereinander;
- Ausbilden einer mit Fluid befüllbaren Hohlkammer im Bereich der oder der jeweiligen Dehnstruktur zwischen den Folienzuschnitten durch deren Verbindung über eine Schweißnaht.

Erfindungsgemäß wird die Dehnstruktur oder die jeweilige Dehnstruktur dabei durch Thermoformen ausgebildet. Die oder die jeweilige Dehnstruktur erhält hierbei ein zentrales Plateau mit um dieses herum, bevorzugt koaxial oder konzentrisch, verlaufenden Ringfalten und Ringwänden. Dabei werden die einzelnen Ringwände jeweils zwischen zwei dieser Ringfalten angeordnet. Eine weitere Ringwand wird dabei zwischen dem Plateau und der am nächsten um dieses herum verlaufenden Ringfalte angeordnet. Die Ausbildung der oder der jeweiligen Dehnstruktur kann in vorteilhafter Weise dabei so erfolgen, dass deren Plateau sowie Ringfalten und Ringwände allesamt gleichzeitig mittels Thermoformen in den oder den zugehörigen Folienzuschnitt eingebracht werden.

Das erfindungsgemäße Verfahren ermöglicht eine nur wenige Arbeitsschritte beinhaltende und einfach zu automatisierende Herstellung der Vorrichtung. Gleichzeitig wird nur wenig Material benötigt, da bevorzugt der Verschnitt auf ein Minimum reduziert ist. Die zur Ausbildung der oder der jeweiligen Dehnstruktur notwendigen Teile können allesamt gleichzeitig durch den Einsatz des Thermoformens in wenigstens einem der Folienzuschnitte ausgebildet werden, was sehr hohe Taktzahlen in der Fertigung erlaubt. Gegenüber anderen Ausgestaltungen, welche die Zusammensetzung einer solchen Vorrichtung oder zumindest ihrer Dehnstruktur aus mehreren miteinander zu verbindenden Teilen verlangt, kommt das erfindungsgemäße Verfahren mit einem einzelnen Verbindungsprozess in Form einer die beiden Folienzuschnitte miteinander verbindenden Schweißnaht aus.

Vorteilhafterweise kann jeweils zwischen einer Ringwand und einer unmittelbar benachbarten Ringfalte der oder der jeweiligen Dehnstruktur eine umlaufende Faltkante ausgebildet werden. Weiterhin kann, vorzugsweise gleichzeitig, zwischen dem Plateau und der am nächsten um dieses herum verlaufenden Ringfalte der oder der jeweiligen Dehnstruktur eine umlaufende Faltkante ausgebildet werden. Die Faltkanten begrenzen die einzelnen Teile der oder der jeweiligen Dehnstruktur und geben deren Bewegungsverhalten während des Befüllens und Entleerens der oder der jeweiligen Hohlkammer vor.

Die Erfindung sieht vor, dass an dem Plateau der oder der jeweiligen Dehnstruktur wenigstens eines Folienzuschnitts ein mit der oder der zugehörigen Hohlkammer fluidleitend verbundener Anschluss angeordnet werden kann. Dessen Anordnung kann bevorzugt stoffschlüssig erfolgen, beispielsweise mittels Kleben oder Schweißen.

Grundsätzlich können im Rahmen des erfindungsgemäßen Verfahrens in wenigstens einem der Folienzuschnitte linienförmige Vertiefungen mittels Thermoformen ausgebildet werden. Deren Anordnung sieht vor, dass diese Vertiefungen jeweils mit mindestens einer Dehnstruktur verbunden sind. Zur Ausbildung eines oder von jeweils zwischen einer Vertiefung des einen Folienzuschnitts und einer Vertiefung des anderen Folienzuschnitts eingeschlossenen Kanals/Kanälen werden die Folienzuschnitte zunächst entsprechend übereinander gelegt. Alternativ oder ergänzend werden zur Ausbildung eines oder von jeweils zwischen einer Vertiefung des einen Folienzuschnitts und einem Bereich des anderen Folienzuschnitts eingeschlossenen Kanals/Kanälen die Folienzuschnitte ebenfalls zunächst entsprechend übereinander gelegt. In jedem Fall werden die beiden Folienzuschnitte im Anschluss entlang von die jeweilige Vertiefung zwischen sich begrenzenden Vertiefungsrändern miteinander verbunden. Dies kann in vorteilhafter Weise stoffschlüssig erfolgen, beispielsweise mittels Kleben oder Schweißen.

Vor oder nach dem Ausbilden der Kanäle können einzelne mit jeweils einem der Kanäle fluidleitend verbundene Einfachan-schlüsse oder kann mindestens ein mit wenigstens einigen der Kanäle fluidleitend verbundener Mehrfachanschluss angeordnet werden. Diese/r können/kann an dem oder mindestens einem der Folienzuschnitt/e befestigt werden. Vorzugsweise können/kann diese/r an einem gemeinsamen Rand der Folienzuschnitte befestigt werden. Die Befestigung erfolgt bevorzugt stoffschlüssig, beispielsweise mittels Kleben oder Schweißen.

Die Erfindung wird nachfolgend anhand zweier schematisch dar-gestellter Ausführungsbeispiele näher erläutert. Es zeigen:
- Figur 1 -: eine erste Ausführungsform der erfindungsgemäßen Vorrichtung, bevorzugt in Form eines Expansionskörpers oder einer Blase, in einer perspektivischen Explosionsdarstellung,
- Figur 2 -: einen Schnitt durch die Vorrichtung aus Figur 1 in funktionsfähiger Beschaffenheit,
- Figur 3 -: eine zweite Ausführungsform der erfindungsgemäßen Vorrichtung, insbesondere in Form eines Expansionskörpers oder einer Blase, in einer perspektivischen Explosionsdarstellung,
- Figur 4 -: einen Schnitt durch die Vorrichtung aus Figur 3 in funktionsfähiger Beschaffenheit,
- Figur 5 -: einen ersten Zustand der Vorrichtung am Beispiel einer Vorrichtung aus Figur 2 in selber Darstellungsweise,
- Figur 6 -: einen zweiten Zustand der Vorrichtung am Beispiel einer Vorrichtung aus Figur 2 in selber Darstellungsweise,
- Figur 7 -: eine dritte Ausführungsform der erfindungsgemäßen Vorrichtung, bevorzugt in Form eines Expansionskörpers oder einer Blase, in geschnittener Darstellungsweise,
- Figur 8 -: eine qualitative Darstellung einer vierten Ausführungsform der erfindungsgemäßen Vorrichtung, bevorzugt in Form eines Expansionskörpers oder einer Blase, in einer Draufsicht auf einen ihrer Folienzuschnitte,
- Figur 9 -: eine qualitative Darstellung einer fünften Ausführungsform der erfindungsgemäßen Vorrichtung, bevorzugt in Form eines Expansionskörpers oder einer Blase, in einer Draufsicht auf einen ihrer Folienzuschnitte,
- Figur 10 -: eine qualitative Darstellung einer sechsten Ausführungsform der erfindungsgemäßen Vorrichtung, bevorzugt in Form eines Expansionskörpers oder einer Blase, in einer Draufsicht auf einen ihrer Folienzuschnitte,
- Figur 11 -: eine qualitative Darstellung einer siebten Ausführungsform der erfindungsgemäßen Vorrichtung, bevorzugt in Form eines Expansionskörpers oder einer Blase, in einer Draufsicht auf einen ihrer Folienzuschnitte sowie
- Figur 12 -: eine achte Ausführungsform der erfindungsgemäßen Vorrichtung, bevorzugt in Form einer Massagematte, in perspektivischer Darstellung.

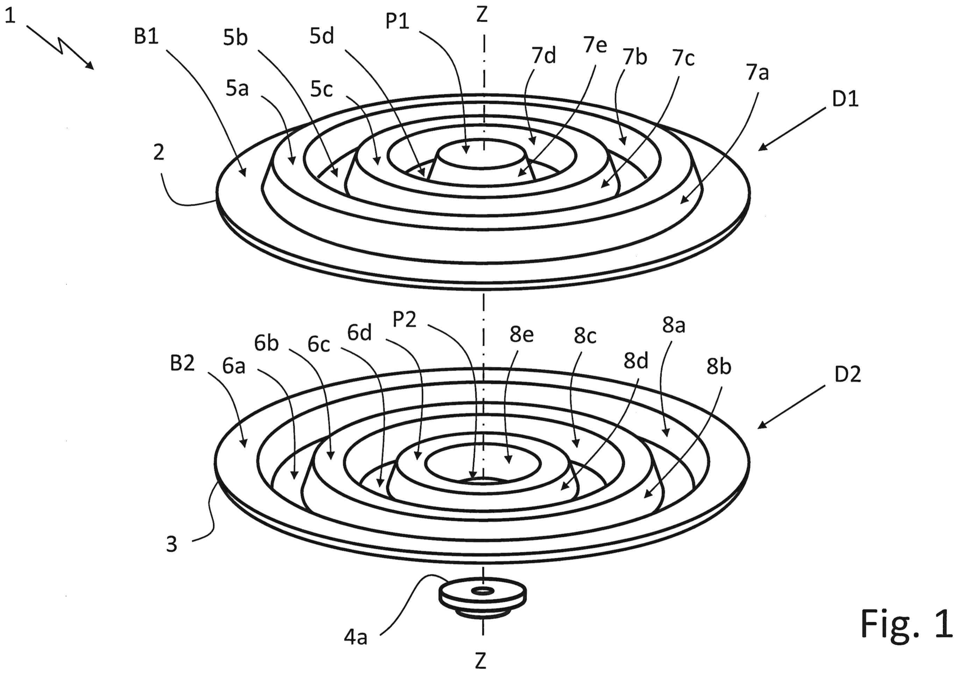

Figur 1 zeigt eine erste Ausführungsform einer erfindungsgemäßen Vorrichtung 1 in der schematischen Abbildung seiner perspektivischen Explosionsdarstellung. Die Vorrichtung 1 umfasst zwei Folienzuschnitte 2, 3 sowie einen Anschluss 4, bei dem es sich vorliegend um einen Einfachanschluss handelt. Dies meint, dass der Anschluss 4 mit einer einzelnen hier nicht näher ersichtlichen Leitung verbindbar ist. Vorzugsweise können die beiden Folienzuschnitte 2, 3 aus thermoplastischem Polyurethan bestehen. In dem hier erkennbaren Beispiel weisen beide Folienzuschnitte 2, 3 jeweils eine in diesen ausgebildete Dehnstruktur D1, D2 auf. Die Dehnstrukturen D1, D2 sind mittels Thermoformen in dem jeweiligen Folienzuschnitt 2, 3 ausgebildet worden. Erkennbar umfasst jede Dehnstruktur D1, D2 einzelne Ringwände 5a-5d, 6a-6d sowie Ringfalten 7a-7e, 8a-8e, welche in dem hier gezeigten Ausführungsbeispiel allesamt koaxial oder konzentrisch zueinander angeordnet sind. Jeweils zwei unmittelbar zueinander benachbarte Ringfalten 7a-7e, 8a-8e sind durch jeweils eine der Ringwände 5a-5d, 6a-6d miteinander verbunden. Dabei verlaufen die einzelnen falten 7a-7e, 8a-8e um eine gemeinsame Hubrichtung Z herum, welche sich senkrecht zu den Ringwänden 5a-5d, 6a-6d erstreckt. Die einzelnen Ringwände 5a-5d, 6a-6d verspringen dabei abwechselnd in ihren Höhenlagen.

Mit Blick auf den ersten, mit Bezug auf die Darstellung in Figur 1 oberen, Folienzuschnitt 2 sind so dessen äußerste erste Ringfalte 7a und die hierzu benachbarte zweite Ringfalte 7b durch eine erste Ringwand 5a miteinander verbunden, während die zweite Ringfalte 7b und die hierzu benachbarte dritte Ringfalte 7c durch eine zweite Ringwand 5b miteinander verbunden sind, wobei die dritte Ringfalte 7c und die hierzu benachbarte vierte Ringfalte 7d durch eine dritte Ringwand 5c miteinander verbunden sind, während die vierte Ringfalte 7d und die hierzu benachbarte sowie am nächsten um die Hubrichtung Z herum verlaufenden fünfte Ringfalte 7e durch eine vierte Ringwand 5d miteinander verbunden sind. Mit Blick auf den zweiten, mit Bezug auf die Darstellung in Figur 1 unteren, Folienzuschnitt 3 sind in gleicher Weise dessen äußerste erste Ringfalte 8a und die hierzu benachbarte zweite Ringfalte 8b durch eine erste Ringwand 6a miteinander verbunden, während die zweite Ringfalte 8b und die hierzu benachbarte dritte Ringfalte 8c durch eine zweite Ringwand 6b miteinander verbunden sind, wobei die dritte Ringfalte 8c und die hierzu benachbarte vierte Ringfalte 8d durch eine dritte Ringwand 6c miteinander verbunden sind, während die vierte Ringfalte 8d und die hierzu benachbarte sowie am nächsten um die Hubrichtung Z herum verlaufenden fünfte Ringfalte 8e durch eine vierte Ringwand 6d miteinander verbunden sind. Die Dehnstrukturen D1, D2 der beiden Folienzuschnitte 2, 3 weisen jeweils ein zentrales Plateau P1, P2 auf. Mit Blick auf den ersten, mit Bezug auf die Darstellung in Figur 1 oberen, Folienzuschnitt 2 ist die am nächsten um die Hubrichtung Z herum verlaufende Ringwand 5d der Dehnstruktur D1 durch die fünfte Ringfalte 7e mit dem Plateau P1 verbunden. Mit Blick auf den zweiten, mit Bezug auf die Darstellung in Figur 1 unteren, Folienzuschnitt 3 ist die am nächsten um die Hubrichtung Z herum verlaufende Ringwand 6d der Dehnstruktur D2 ebenfalls durch die fünfte Ringfalte 8e mit dem Plateau P2 verbunden.

Vorliegend und rein beispielhaft sind die beiden Folienzu-schnitte 2, 3 identisch ausgebildet.

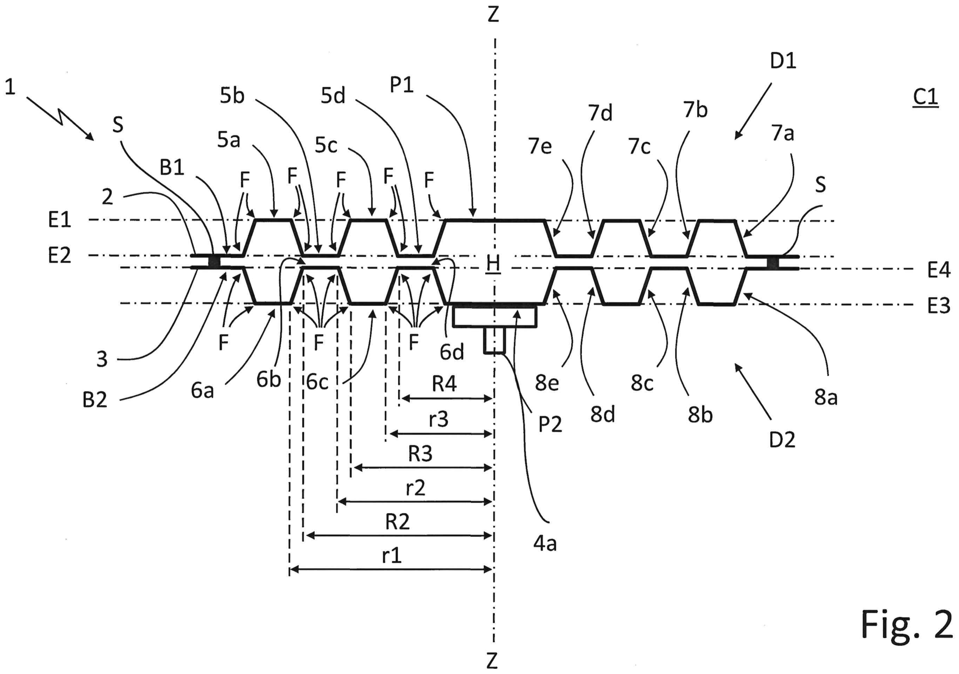

Figur 2 ist ein Schnitt durch die Vorrichtung aus Figur 1 entnehmen, welche nunmehr eine funktionsfähige Beschaffenheit aufweist. Hierzu wurden die beiden Folienzuschnitte 2, 3 durch eine umlaufende Schweißnaht S miteinander verbunden. Wie in dem hier gezeigten Ausführungsbeispiel zu erkennen, können die beiden Folienzuschnitte 2, 3 hierfür jeweils einen äußeren Verbindungsrand B1, B2 besitzen. Konkret verbindet hierbei die Schweißnaht S die Verbindungsränder B1, B2 der beiden Folienzuschnitte 2, 3, so dass diese eine mit Fluid befüllbare Hohlkammer H zwischen sich einschließen. Alternativ kann die Schweißnaht S in hier nicht näher gezeigter Weise selbstverständlich auch direkt zwischen den äußeren Ringfalten 7a, 8a der beiden Folienzuschnitte 2, 3 ausgebildet sein, um diese direkt miteinander zu verbinden. Vorliegend ist ein komprimierter Zustand C1 der beiden Dehnstrukturen D1, D2 dargestellt, in dem die Vorrichtung 1 die geringstmögliche Ausdehnung in Bezug auf die Hubrichtung Z aufweist. Erkennbar verspringen die einzelnen Ringfalten 5a-5d, 6a-6d der jeweiligen Dehnstruktur D1, D2 dabei so, dass diese sich abwechselnd in einer von zwei in Bezug auf die Hubrichtung Z parallel zueinander beabstandeten Ebenen E1, E2; E3, E4 erstrecken.

Wie in dem hier gezeigten Schnitt besonders gut zu erkennen, sind die einzelnen Ringfalten 7a-7e; 8a-8e jeder Dehnstruktur D1, D2 so ausgebildet, dass diese sich in Bezug auf eine jeweils parallele Ebene zur Hubrichtung Z nicht überschneiden. Konkret ist jede Dehnstruktur D1, D2 so aufgebaut, dass von jeweils zwei durch eine der Ringwände 5a-5d; 6a-6d mit-einander verbundenen Ringfalten 7a-7e; 8a-8e der Außenradius R2-R4 der von diesen näher um die Hubrichtung Z herum verlaufenden Ringwand 5b-5d; 6b-6d kleiner oder gleich dem Innenradius rl-r3 der anderen Ringwand 5a-5c; 6a-6c ist. Der bereits in Figur 1 ersichtliche Anschluss 4 ist nunmehr an dem Plateau P2 der Dehnstruktur D2 des, mit Bezug auf die Darstellung in Figur 1 unteren, zweiten Folienzuschnitts 3 derart angeordnet, dass dieser fluidleitend mit der Hohlkammer H verbunden ist. Weiterhin ist jede Ringfalte 7a-7e; 8a-8e der jeweiligen Dehnstruktur D1, D2 entlang einer Faltkante F gegenüber wenigstens einer mit ihr verbundenen Ringwand 5a-5d; 6a-6d abwinkelbar. Dies gilt auch für das jeweilige Plateau P1, P2 der Dehnstrukturen D1, D2, welche jeweils durch eine umlaufende Faltkante F begrenzt sind, entlang welcher die am nächsten um die Hubrichtung Z herum verlaufende Ringfalte 7e, 8e mit dem jeweiligen Plateau P1, P2 verbunden und gegenüber diesem abwinkelbar ist.

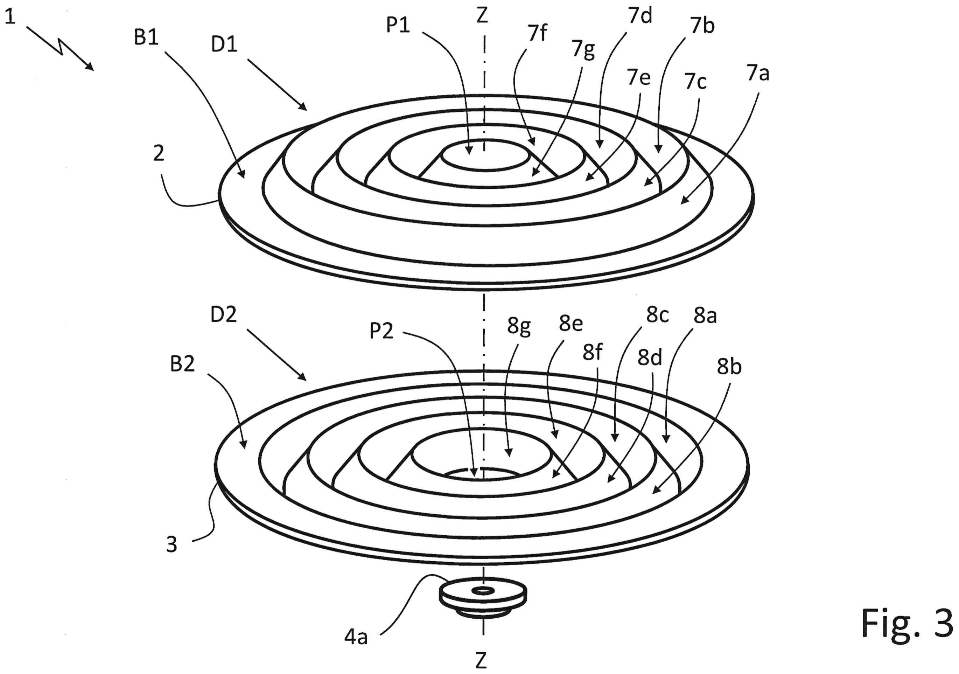

Figur 3 zeigt eine zweite Ausführungsform der erfindungsgemäßen Vorrichtung 1 in einer schematischen Abbildung seiner perspektivischen Explosionsdarstellung. Im Unterschied zu der in den Figuren 1 und 2 ersichtlichen ersten Ausführungsform weisen die beiden Folienzuschnitte 2, 3 keinerlei Ringwände 5a-5d; 6a-6d auf, sondern ausschließlich aufeinanderfolgende und direkt miteinander verbundene Ringfalten 7a-7f; 8a-8f.

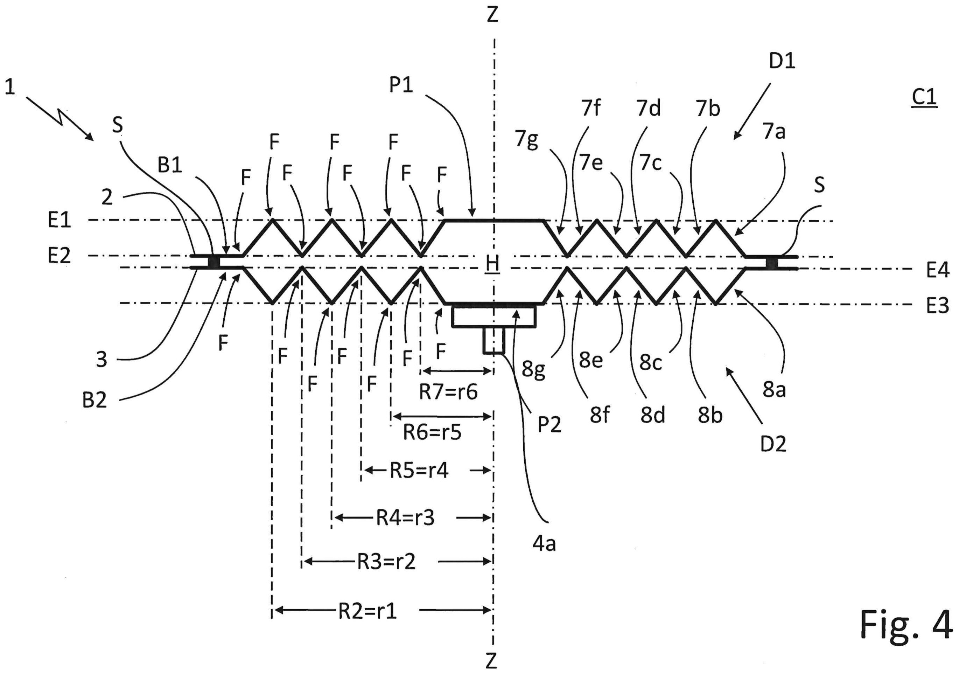

Figur 4 ist ein Schnitt durch die Vorrichtung aus Figur 3 zu entnehmen, welche ebenfalls eine nunmehr funktionsfähige Beschaffenheit aufweist. Zur Vermeidung von Wiederholungen wird an dieser Stelle zumindest sinngemäß auf die vorstehenden Ausführungen zu Figur 2 verwiesen, wobei selbe Bezugszeichen die gleichen Merkmale verdeutlichen. Auch durch die Ausgestaltung gemäß dem zweiten Ausführungsbeispiel ist in Bezug auf zwei direkt miteinander verbundener Ringfalten 7a-7f; 8a-8f der Außenradius R2-R7 der jeweils näher um die Hubrichtung Z herum verlaufenden Ringfalte 7b-7g; 8b-8g gleich dem Innenradius r1-r6 der mit ihr verbundenen Ringfalte 7a-7f; 8a-8f.

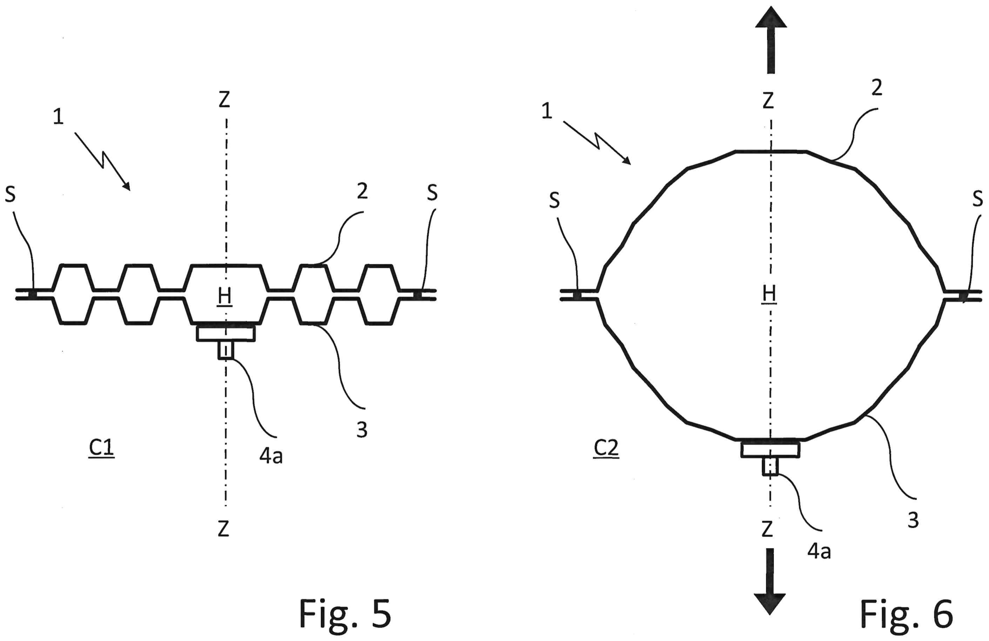

Figur 5 zeigt nochmals die Vorrichtung 1 in ihrem komprimierten Zustand C1 anhand der hierfür rein beispielhaft gewählten Ausführungsform gemäß Figur 2.

Figur 6 ist demgegenüber ein expandierter Zustand C2 der Vorrichtung 1 anhand der hierfür rein beispielhaft gewählten Ausführungsform gemäß Figur 5 zu entnehmen. Es versteht sich von selbst, dass die Darstellung in Figur 6 sinngemäß auch den expandierten Zustand C2 der Vorrichtung 1 aus den Figuren 3 und 4 gemäß der zweiten Ausführungsform sowie aller anderen noch nachfolgend beschriebenen Ausführungsformen zeigt. Die dabei eingetretene Ausdehnung der Vorrichtung 1 in Bezug auf die Hubrichtung Z ist durch schwarze Pfeile angedeutet. Wie zu erkennen, ist die Ausdehnung der sie zumindest bereichsweise begrenzenden Dehnstrukturen D1, D2 in Bezug auf die Hubrichtung Z durch eine entsprechende Veränderung des Füllgrads der Hohlkammer H über das Ein- und Ausleiten von Fluid durch den Anschluss 4a hindurch von dem komprimierten Zustand C1 in den expandierten Zustand C2 und zurück veränderbar.

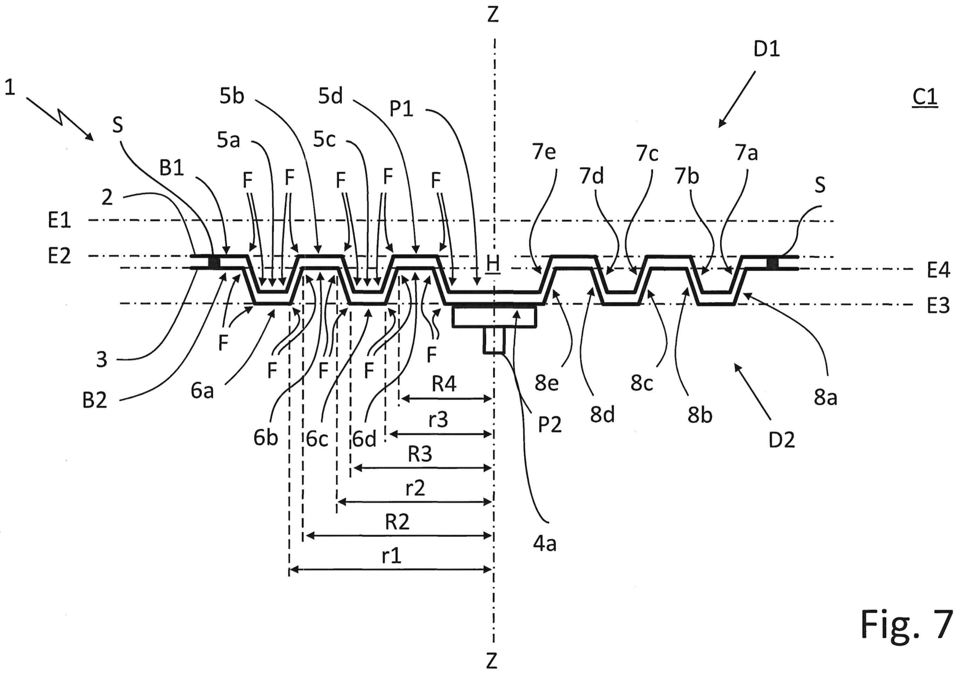

Figur 7 ist eine dritte Ausführungsform der Vorrichtung 1 zu entnehmen, deren Folienzuschnitte 2, 3 - wie hier beispielhaft gezeigt analog der ersten Ausführungsform - sowohl Ringfalten 7a-7f; 8a-8f als auch Ringwände 5a-5d; 6a-6d umfasst. Selbstverständlich können die Folienzuschnitte 2, 3 in hier nicht dargestellter Weise - analog der zweiten Ausführungsform - nur Ringfalten 7a-7f; 8a-8f umfassen. Der wesentliche Unterschied zu den zuvor beschriebenen Ausführungsformen besteht vielmehr in der relativen Anordnung der Dehnstrukturen D1, D2 zueinander, wobei einer der beiden Folienzuschnitte 2, 3 in Bezug auf eine Achse senkrecht zur Hubrichtung Z um 180° gedreht ist, so dass die Ringfalten 7a-7f; 8a-8f beider Folienzuschnitte 2, 3 nunmehr parallel zueinander verlaufen. Mit anderen Worten sind die beiden Dehnstrukturen D1, D2 der Folienzuschnitte 2, 3 quasi ineinandergesteckt, wodurch sich eine geringere Aufbauhöhe für die Vorrichtung 1 in ihrem hier dargestellten komprimierten Zustand C1 ergibt. Zur besseren Verdeutlichung wurden die in den Figuren 2 und 4 ersichtlichen Ebenen E1-E4 auch in Figur 7 belassen, um zu zeigen, dass sich die Aufbauhöhe der Vorrichtung 1 nur noch zwischen der zweiten Ebene E2 und der dritten Ebene E3 erstreckt, während sie in den beiden Ausführungsformen der Figuren 2 und 3 eine fast doppelt so große Höhe zwischen der ersten Ebene E1 und der dritten Ebene E3 aufweist.

Die in Figur 7 gezeigte Anordnung der beiden Folienzuschnitte 2, 3 zueinander kann auch für alle weiteren Ausgestaltungsformen der Dehnstrukturen D1, D2 erfolgen, welche nachfolgend näher beschrieben werden.

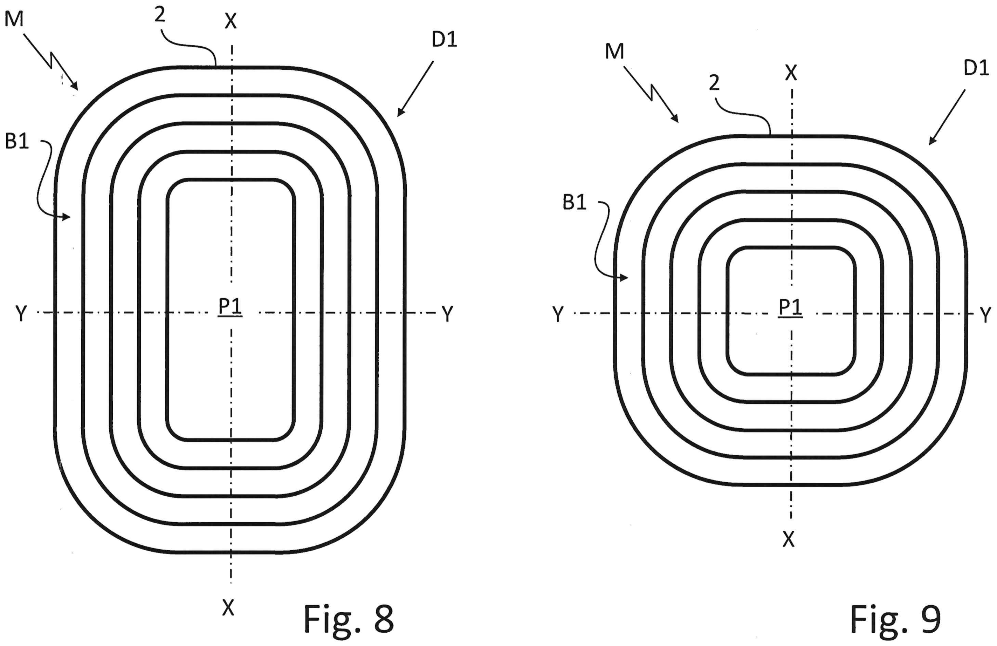

Die Figuren 8 bis 11 zeigen jeweils eine Draufsicht in Hubrichtung Z auf weitere mögliche Ausführungsformen der Vorrichtung 1. Dabei fällt der Blick rein beispielhaft auf deren jeweiligen ersten Folienzuschnitt 2. Die Figuren 8 bis 11 zeigen rein qualitative Darstellungen in Bezug auf weitere mögliche Außenformen der Vorrichtung 1 sowie weiteren möglichen Mustern M der Dehnstrukturen D1, D2, welche rein beispielhaft auf die erste Dehnstruktur D1 bezogen werden aber auch für die zweite Dehnstruktur D2 des zweiten Folienzuschnitts 3 gelten können. Es versteht sich dabei von selbst, dass das Muster M der Dehnstruktur D1 sich hierbei aus dem, insbesondere ineinandergesetzten, Verlauf ihrer Faltkanten F sowie Ringfalten 7a-7e; 8a-8e und Ringwände 5a-5d; 6a-6d (vgl. Ausführungsform gemäß den Figuren 1 sowie 2 und 7) oder nur ihrer Faltkanten F und Ringfalten 7a-7g; 8a-8g (vgl. Ausführungsform gemäß den Figuren 3 und 4) ergeben kann, welche sich jeweils um das Plateau P1 herum erstrecken. Rein beispielhaft beinhalten alle diese Ausführungsformen auch den Verbindungsrand B1, welcher aber auch - wie an anderer Stelle bereits beschrieben - entfallen kann.

Figur 8 zeigt eine vierte Ausführungsform der Vorrichtung 1, deren Außenform als rechteckig mit gerundeten Ecken beschrieben werden kann. In gleicher Weise zeigt auch die Dehnstruktur D1 ineinandergesetzte und zueinander beabstandete Rechtecke mit jeweils gerundeten Ecken. Die Dehnstruktur D1 ist entlang einer Längsachse X sowie entlang einer Querachse Y als jeweils symmetrisch anzusehen. Wie zu erkennen, erstreckt sich die Vorrichtung 1 dabei rein beispielhaft etwas mehr in Längsrichtung X als in Querrichtung Y. Damit liegt die Form der Vorrichtung 1 in einem - nicht näher gezeigten - diese begrenzenden Rechteck.

Figur 9 zeigt eine fünfte Ausführungsform der Vorrichtung 1, deren Außenform als quadratisch mit gerundeten Ecken beschrieben werden kann. In gleicher Weise zeigt auch die Dehnstruktur D1 ineinandergesetzte und zueinander beabstandete Quadrate mit jeweils gerundeten Ecken. Die Dehnstruktur D1 ist auch hier entlang der Längsachse X sowie entlang der Querachse Y als jeweils symmetrisch anzusehen.

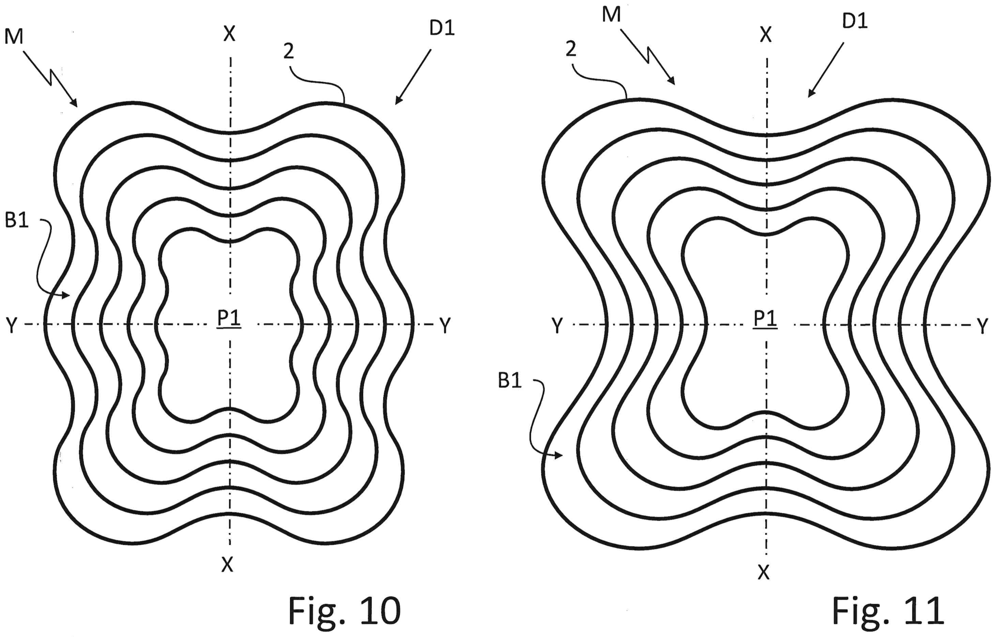

Figur 10 zeigt eine sechste Ausführungsform der Vorrichtung 1, deren Außenform als insgesamt gewellt beschrieben werden kann. In gleicher Weise zeigt auch die Dehnstruktur D1 in- einandergesetzte und zueinander beabstandete Wellenformen. Die Dehnstruktur D1 ist auch hier entlang der Längsachse X sowie entlang der Querachse Y als jeweils symmetrisch anzusehen. Wie zu erkennen, erstreckt sich die Vorrichtung 1 dabei rein beispielhaft etwas mehr in Längsrichtung X als in Querrichtung Y. Damit liegt die Form der Vorrichtung 1 in einem - nicht näher gezeigten - diese begrenzenden Rechteck. Die beiden relativ zur Längsachse X verlaufenden Ränder der Vorrichtung 1 sowie der zugehörige Teil des Musters M der Dehnstruktur D1 sind dabei stärker gewellt als die beiden relativ zur Querachse Y verlaufenden Ränder der Vorrichtung 1 sowie der zugehörige Teil des Musters M der Dehnstruktur D1.

Figur 11 zeigt eine siebte Ausführungsform der Vorrichtung 1, deren Außenform ebenfalls als gewellt beschrieben werden kann. Allerdings weisen hierbei die relativ zur Längsachse X und zur Querachse Y verlaufenden Ränder der Vorrichtung 1 sowie der jeweils zugehörige Teil des Musters M der Dehnstruktur D1 eine ähnliche oder sogar gleiche Wellenform auf. Insgesamt könnte die Außenform der Vorrichtung 1 daher als einfache Blütenform beschrieben werden. In gleicher Weise zeigt auch die Dehnstruktur D1 ineinandergesetzte und zueinander beabstandete einfache Blütenformen. Die Dehnstruktur D1 ist auch hierbei entlang der Längsachse X sowie entlang der Querachse Y als jeweils symmetrisch anzusehen. Wie zu erkennen, erstreckt sich die Vorrichtung 1 dabei auch hier rein beispielhaft etwas mehr in Längsrichtung X als in Quer-richtung Y. Damit liegt die Form der Vorrichtung 1 in einem - nicht näher gezeigten - diese begrenzenden Rechteck.

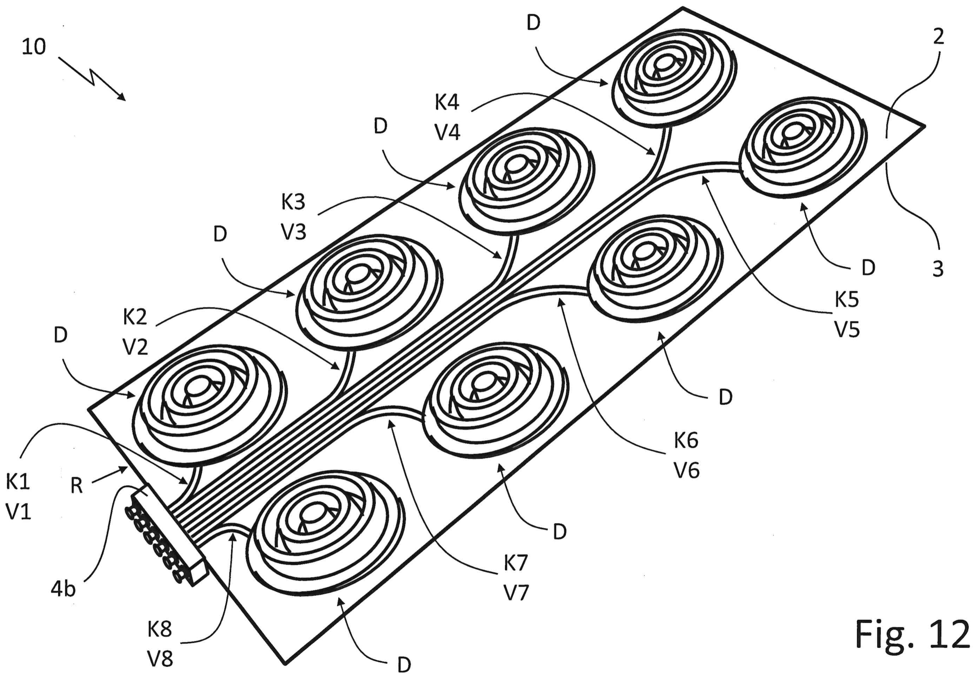

Figur 12 ist eine alternative Gestaltung der Dehnstrukturen D1, D2 der Vorrichtung 1 zu entnehmen, welche - wie hier zu sehen und analog der ersten Ausführungsform - sowohl Ringfalten 7a-7f; 8a-8f und Ringwände 5a-5d; 6a-6d als auch - analog der zweiten Ausführungsform und hier nicht zu sehen - nur Ringfalten 7a-7f; 8a-8f umfassen kann. Grundsätzlich können die Dehnstrukturen aber auch alle anderen zuvor beschriebenen und hier nicht näher gezeigten alternativen Ausführungsformen aufweisen. Der wesentliche Unterschied zu den zuvor beschriebenen Ausführungsformen besteht vielmehr in der Form der jeweiligen Dehnstruktur D1, D2, welche nun nicht mehr kreisrund, sondern eine hiervon abweichende mögliche Ausgestaltung darstellt.

Figur 12 zeigt eine achte Ausführungsform der erfindungsgemäßen Vorrichtung 10 in einer schematischen perspektivischen Darstellung. Erkennbar weist hierbei wenigstens einer der beiden Folienzuschnitte 2, 3 eine Vielzahl an Dehnstrukturen D auf, so dass die Vorrichtung als Massagematte 10 bezeichnet werden kann. Dabei kann der, mit Bezug auf die Darstellung in Figur 5 unteren, zweiten Folienzuschnitts 3 als Trägerlage dienen. Rein beispielhaft weist jede der Dehnstrukturen D vorliegend - und analog der ersten Ausführungsform - sowohl Ringfalten 7a-7e; 8a-8e als auch Ringwände 5a-5d; 6a-6d auf, kann aber auch - in nicht näher gezeigter Weise - nur Ringfalten 7a-7g; 8a-8g wie in der zweiten Ausführungsform umfassen. Anders als bei den anderen Ausführungsfomen der erfindungsgemäßen Vorrichtung 1 weisen die Dehnstrukturen D selbst hier keine Anschlüsse auf. Vielmehr sind diese mit einzelnen Kanälen K1-K8 fluidleitend verbunden, welche zwischen den beiden Folienzuschnitten 2, 3 ausgebildet sind. Konkret weist hierzu wenigstens einer der Folienzuschnitte 2, 3 zumindest eine in diesem ausgebildete linienförmige Vertiefung V1-V2 auf. In hier nicht näher ersichtlicher Weise kann jede Vertiefung V1-V8 im Schnitt des zugehörigen Folienzuschnitts 2, 3 einen beispielsweise U-förmigen Querschnitt besitzen. Die Folienzuschnitte 2, 3 sind unter Ausbildung von mehreren mit jeweils einer Hohlkammer H der einzelnen Dehnstrukturen D fluidleitend verbundenen Kanälen K1-K8 verbunden. Vorzugsweise kann diese Verbindung entlang von die Vertiefung V1-V8 zwischen sich begrenzenden Vertiefungsrändern erfolgen, bevorzugt durch Verschweißen. Die sich von den Dehnstrukturen D weg erstreckenden Kanäle K1-K8 verlaufen allesamt zu einem gemeinsamen Rand R der Folienzuschnitte 2, 3, an dem ein Mehrfachanschluss 4b angeordnet ist. Die einzelnen Kanäle K1-K8 sind in geeigneter Weise fluidleitend mit den einzelnen Anschlüssen des Mehrfachanschlusses 4b fluidleitend verbunden.

## Patentansprüche

1. Vorrichtung (1, 10) zur Manipulation eines Oberflächen-bereichs eines Sitzes, bevorzugt Massage- oder Verstellvorrichtung, umfassend zwei Folienzuschnitte (2, 3), von denen wenigstens ein Folienzuschnitt (2, 3) mindestens eine in diesem ausgebildete Dehnstruktur (D, D1, D2) aufweist, in deren Bereich die beiden Folienzuschnitte (2, 3) durch eine Schweißnaht (S) derart miteinander verbunden sind, dass diese eine mit Fluid befüllbare Hohlkammer (H) zwischen sich einschließen, wobei durch eine Veränderung des Füllgrads der oder der jeweiligen Hohlkammer (H) die Ausdehnung der sie zumindest bereichsweise begrenzenden Dehnstruktur (D, D1, D2) in Bezug auf eine Hubrichtung (Z) von einem komprimierten Zustand (C1) in einen expandierten Zustand (C2) und zurück veränderbar ist,
**dadurch gekennzeichnet,**
**dass** die oder die jeweilige Dehnstruktur (D, D1, D2) um ihre Hubrichtung (Z) herum, bevorzugt koaxial oder konzentrisch, verlaufende Ringfalten (7a-7g; 8a-8g) auf-weist, wobei entweder wenigstens oder jeweils zwei Ringfalten (7a-7g; 8a-8g) direkt miteinander verbunden sind und der Außenradius (R2-R7) der näher um die Hubrichtung (Z) herum verlaufenden Ringfalte (7b-7g; 8b-8g) gleich dem Innenradius (r1-r6) der mit ihr verbundenen Ringfalte (7a-7f; 8a-8f) ist oder/und wenigstens oder jeweils zwei der Ringfalten (7a-7e; 8a-8e) durch eine Ringwand (5a-5d; 6a-6d) miteinander verbunden sind und der Außenradius (R2-R4) der näher um die Hubrichtung (Z) herum verlaufenden Ringwand (5b-5d; 6b-6d) kleiner oder gleich dem Innenradius (r1-r3) der anderen Ringwand (5a-5c; 6a-6c) ist.

2. Vorrichtung (1, 10) nach Anspruch 1,
**dadurch gekennzeichnet,**
**dass** jede Ringfalte (7a-7g; 8-8g) der oder der jeweiligen Dehnstruktur (D, D1, D2) entlang einer, bevorzugt runden oder kreisrunden, Faltkante (F) gegenüber wenigstens einer mit ihr verbundenen Ringwand (5a-5d; 6a-6d) und/ oder Ringfalte (7a-7g; 8-8g) abwinkelbar ist.

3. Vorrichtung (1, 10) nach Anspruch 1 oder 2,
**dadurch gekennzeichnet,**
**dass** sich im komprimierten Zustand (C1) der oder der jeweiligen Dehnstruktur (D, D1, D2) deren Ringwände (5a-5d; 6a-6d) abwechselnd in einer von zwei in Bezug auf die Hubrichtung (Z), bevorzugt parallel, zueinander beabstandeten Ebenen (E1, E2; E3, E4) erstrecken.

4. Vorrichtung (1, 10) nach einem der vorhergehenden Ansprüche,
**dadurch gekennzeichnet,**
**dass** die oder die jeweilige Dehnstruktur (D, D1, D2) ein zentrales, bevorzugt rundes oder kreisrundes, Plateau (P1, P2) aufweist, welches durch eine umlaufende Faltkante (F) begrenzt ist, wobei die am nächsten um die Hubrichtung (Z) herum verlaufende Ringwand (5a-5d; 6a-6d) der Dehnstruktur (D, D1, D2) durch eine Ringfalte (7e; 8e) entlang dieser Faltkante (F) mit dem Plateau (P1, P2) verbunden und gegenüber diesem abwinkelbar ist.

5. Vorrichtung (1, 10) nach Anspruch 4,
**dadurch gekennzeichnet,**
**dass** an dem Plateau (P1, P2) der oder der jeweiligen Dehnstruktur (D, D1, D2) ein Anschluss (4a) vorgesehen ist, welcher fluidleitend mit der oder der jeweils zugehörigen Hohlkammer (H) verbunden ist.

6. Vorrichtung (1, 10) nach einem der Ansprüche 1 bis 5,
**dadurch gekennzeichnet,**
**dass** wenigstens einer der Folienzuschnitte (2, 3) zumindest eine in diesem ausgebildete linienförmige Vertiefung (V1-V8) aufweist, wobei die Folienzuschnitte (2, 3) unter Ausbildung wenigstens eines mit der oder mindestens einer Hohlkammer (H) fluidleitend verbundenen Kanals (K1-K8) entlang von die Vertiefung (V1-V8) zwischen sich begrenzenden Vertiefungsrändern mitein-ander verbunden, bevorzugt verschweißt, sind.

7. Massagematte (10), bevorzugt für einen Fahrzeugsitz, umfassend eine der folgenden alternativen Zusammensetzungen:
a) eine Trägerlage mit mehreren, bevorzugt mittels Schweißen, an dieser angeordneten Vorrichtungen (1) nach einem der vorhergehenden Ansprüche;
b) eine Vorrichtung (1) nach einem der vorhergehenden Ansprüche, bei der nur einer der Folienzuschnitte (2, 3) mehrere Dehnstrukturen (D, D1, D2) aufweist, wobei die Dehnstrukturen (D, D1, D2) des einen Folienzuschnitts (2, 3) zusammen mit Bereichen des, bevorzugt als Trägerlage dienenden, anderen Folienzuschnitts (2, 3) jeweils eine gemeinsame Hohlkammer (H) zwischen sich einschließen;
c) eine Vorrichtung (1) nach einem der vorhergehenden Ansprüche, bei der beide Folienzuschnitte (2, 3) jeweils mehrere Dehnstrukturen (D, D1, D2) aufweisen, wobei die Dehnstrukturen (D, D1, D2) des einen Folienzuschnitts (2, 3) zusammen mit den Dehnstrukturen (D, D1, D2) des anderen Folienzuschnitts (2, 3) jeweils eine gemeinsame Hohlkammer (H) zwischen sich einschließen.

8. Verfahren zur Herstellung einer Vorrichtung (1) zur Manipulation eines Oberflächenbereichs eines Sitzes, vorzugsweise Massage- oder Verstellvorrichtung, bevorzugt nach einem der Ansprüche 1 bis 6, umfassend die Schritte:
- Bereitstellen zweier Folienzuschnitte (2, 3);
- Ausbilden mindestens einer Dehnstruktur (D, D1, D2) in wenigstens einem der Folienzuschnitte (2, 3);
- Anordnen der Folienzuschnitte (2, 3) zumindest be-reichsweises übereinander;
- Ausbilden einer mit Fluid befüllbare Hohlkammer (H) im Bereich der oder der jeweiligen Dehnstruktur (D, D1, D2) zwischen den Folienzuschnitten (2, 3) durch deren Verbindung über eine Schweißnaht (S),
**dadurch gekennzeichnet,**
**dass** die Dehnstruktur (D, D1, D2) oder die jeweilige Dehnstruktur (D, D1, D2) durch Thermoformen ausgebildet wird, welche ein zentrales Plateau (P1, P2) aufweist, wobei um das Plateau (P1, P2) herum, bevorzugt koaxial oder konzentrisch, verlaufend Ringfalten (7a-7g; 8a-8g) oder Ringwände (5a-7d; 6a-6d) sowie Ringfalten (7a-7e; 8a-8e) ausgebildet werden, welche sowohl jeweils zwischen zwei dieser Ringwände (7a-7g; 8a-8g) als auch zwischen dem Plateau (P1, P2) und der am nächsten um dieses herum verlaufenden Ringwand (5d; 6d) angeordnet sind.

9. Verfahren nach Anspruch 8,
**dadurch gekennzeichnet,**
**dass** zwischen dem Plateau (P1, P2) und der mit ihm verbundenen Ringfalte (7e, 7g; 8e, 8g) sowie entweder jeweils zwischen den Ringfalten (7a-7g; 8a-8g) oder jeweils zwischen einer Ringfalte (7a-7e; 8a-8e) und einer unmittelbar benachbarten Ringwand (5a-5d; 6a-6d) der oder der jeweiligen Dehnstruktur (D, D1, D2) eine umlaufende Faltkante (F) ausgebildet wird.

10. Verfahren nach Anspruch 8 oder 9,
**dadurch gekennzeichnet,**
**dass** an dem Plateau (P1, P2) der oder der jeweiligen Dehnstruktur (D, D1, D2) wenigstens eines Folienzu-schnitts (2, 3) ein mit der oder der zugehörigen Hohlkammer (H) fluidleitend verbundener Anschluss (4a, 4b) angeordnet, bevorzugt angeschweißt, wird.

11. Verfahren nach einem der Ansprüche 8 bis 10,
**dadurch gekennzeichnet,**
**dass** mittels Thermoformen in wenigstens einem der Folienzuschnitte (2, 3) linienförmige Vertiefungen (V1-V8) ausgebildet werden, welche jeweils mit mindestens einer Dehnstruktur (D, D1, D2) verbunden sind, wobei die Folienzuschnitte (2, 3) zur Ausbildung von jeweils zwischen einer Vertiefung (V1-V8) des einen Folienzuschnitts (2, 3) und einer Vertiefung (V1-V8) des anderen Folienzuschnitts (2, 3) oder eines Bereichs des anderen Folienzuschnitts (2, 3) eingeschlossenen Kanälen (K1-K8) übereinander gelegt und entlang von die jeweilige Vertiefung (V1-V8) zwischen sich begrenzenden Vertiefungsrändern miteinander verbunden, bevorzugt verschweißt, werden.

12. Verfahren nach Anspruch 11,
**dadurch gekennzeichnet,**
**dass** vor oder nach dem Ausbilden der Kanäle (K1-K8) einzelne mit jeweils einem der Kanäle (K1-K8) fluidleitend verbundene Einfachanschlüsse (4a) oder mindestens ein mit wenigstens einigen der Kanäle (K1-K8) fluidleitend verbundener Mehrfachanschluss (4b) an den oder mindestens einem der Folienzuschnitt/e (2, 3), vorzugsweise an einem gemeinsamen Rand (R) der Folienzuschnitte (2, 3), befestigt, bevorzugt angeschweißt, werden/wird.
